# EUROPEAN PATENT APPLICATION

(11) **EP 4 520 726 A1**
(43) Date of publication of application: **12.03.2025**
(21) Application number: 24196120.0
(22) Date of filing: 23.08.2024
(51) Int. Cl.: C01G 53/50, H01M 4/131, H01M 4/36, H01M 4/525

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 24.08.2023 KR 20230111552
(71) Applicant: SAMSUNG SDI CO., LTD., Giheung-gu Yongin-si, Gyeonggi-do 17084 (KR)
(72) Inventor: KANG, Byungwuk, Yongin-si, Gyeonggi-do 17084 (KR); DOO, Sungwook, Yongin-si, Gyeonggi-do 17084 (KR); KIM, Young-Ki, Yongin-si, Gyeonggi-do 17084 (KR); CHOO, Sung Ho, Yongin-si, Gyeonggi-do 17084 (KR); JUN, Dowook, Yongin-si, Gyeonggi-do 17084 (KR); KANG, Gwiwoon, Yongin-si, Gyeonggi-do 17084 (KR); JEONG, Jaeyong, Yongin-si, Gyeonggi-do 17084 (KR); KONG, Youngsun, Yongin-si, Gyeonggi-do 17084 (KR); KANG, Seok Mun, Yongin-si, Gyeonggi-do 17084 (KR); YOON, Jaesang, Yongin-si, Gyeonggi-do 17084 (KR)
(74) Representative: Marks & Clerk LLP

(57) **Abstract**

A positive electrode active material includes a core particle including a layered lithium nickel-manganese-based composite oxide, a first coating layer provided on the surface of the core particle and including Al, and a second coating layer provided on the first coating layer and including Ni. A method for preparing a positive electrode active material includes: mixing a layered nickel-manganese composite hydroxide and a lithium raw material and performing a first heat treatment to obtain a lithium nickel-manganese-based composite oxide, adding an aluminium (Al) raw material to an aqueous solvent, adding the lithium nickel-manganese composite oxide thereto and mixing them, then adding a nickel (Ni) raw material and mixing them, and drying the mixture and performing a second heat treatment.

## Description

### BACKGROUND

### (a) Field

One or more aspects of embodiments of the present disclosure are directed toward positive electrode active materials, preparation methods thereof, positive electrodes including the positive electrode active materials, and rechargeable lithium batteries including the positive electrodes.

### (b) Description of the Related Art

A portable information device such as a cell phone, a laptop, smart phone, and/or the like, and/or an electric vehicle may use a rechargeable lithium battery having relatively high energy density and easy or suitable portability as a driving power source. Recently, research has been actively pursued directed at the application of a rechargeable lithium battery with high energy density as a driving power source for hybrid and/or electric vehicles and/or power storage power source for home power storage units and/or power walls.

Various positive electrode active materials have been investigated in an effort to obtain rechargeable lithium batteries that are suitable for the above applications. Among them, lithium nickel-based oxide, lithium nickel manganese cobalt composite oxide, lithium nickel cobalt aluminium composite oxide, and/or lithium cobalt oxide may be utilized as positive electrode active materials. However, while a demand for relatively large-sized, high-capacity, and/or high-energy density rechargeable lithium batteries has recently increased, a supply of positive electrode active materials including cobalt, which is a rare metal, is expected to be in short supply or severely insufficient. Indeed, because cobalt is expensive and has little remaining reserves, there is a need or desire to develop a positive electrode active material not including (e.g., excluding) cobalt and/or including it in a reduced content (e.g., amount).

### SUMMARY

One or more aspects of embodiments of the present disclosure are directed toward a positive electrode active material including a lithium nickel-manganese-based composite oxide, which ensures (e.g., may realize) economic efficiency, suitably high capacity and suitably long cycle-life characteristics, and has improved high-voltage and high-temperature characteristics, a preparation method thereof, a positive electrode including the positive electrode active material, and a rechargeable lithium battery including the positive electrode. Additional aspects will be set forth in part in the description which follows and, in part, will be apparent from the description, or may be learned by practice of the presented embodiments of the disclosure.

One or more embodiments provide a positive electrode active material including a core particle including a layered lithium nickel-manganese-based composite oxide, a first coating layer provided on the surface of the core particle and including aluminium (Al), and a second coating layer provided on the first coating layer and including nickel (Ni).

One or more embodiments provide a method for preparing a positive electrode active material which includes mixing a layered nickel-manganese composite hydroxide and a lithium raw material and performing a first heat treatment to obtain a lithium nickel-manganese-based composite oxide; adding an Al raw material to an aqueous solvent, adding the lithium nickel-manganese composite oxide thereto and mixing them, then adding a Ni raw material and mixing them; and drying the mixture and performing a second heat treatment.

In some embodiments, a positive electrode includes a positive electrode current collector and a positive electrode active material layer on the positive electrode current collector, wherein the positive electrode active material layer includes the positive electrode active material of the present embodiments.

One or more embodiments provide a rechargeable lithium battery including the positive electrode of the present embodiments, a negative electrode, and an electrolyte.

At least some of the above and other features of the invention are set out in the claims.

The positive electrode active material according to the present embodiments, whose capacity may be maximized or increased, while minimizing or reducing a production cost, may secure or realize suitably long cycle-life characteristics and may improve high voltage and high-temperature characteristics. Accordingly, a rechargeable lithium battery, to which the positive electrode active material is applied, may exhibit suitably high initial charge/discharge capacity and efficiency even under high-voltage driving conditions, may realize suitably long cycle-life characteristics, and may effectively or suitably suppress or reduce gas generation problems caused by high-voltage and high-temperature driving.

### BRIEF DESCRIPTION OF THE DRAWINGS

These and/or other aspects will become apparent and more readily appreciated from the following description of the embodiments, taken in conjunction with the accompanying drawings in which:
FIGS. 1-4 are each a cross-sectional view schematically showing rechargeable lithium batteries according to one or more embodiments.
FIG. 5 is an HR-STEM (High Resolution-Scanning Transmission Electron Microscopy) image of the cross section of the positive electrode active material of Example 1.
FIG. 6 is an EDS (Energy Dispersive X-ray Spectrometry) analysis image highlighting Ni in the cross section of the positive electrode active material of Example 1.
FIG. 7 is an EDS analysis image highlighting Al in the cross section of the positive electrode active material of Example 1.

### DETAILED DESCRIPTION OF THE EMBODIMENTS

Hereinafter, specific embodiments will be described in more detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present therebetween.

As used herein, the term "layer" includes not only a shape formed on the whole (e.g., entire or substantially entire) surface when viewed in plan view, but also a shape formed on a partial surface. Herein, the phrase "on a plane," or "in plan view," means viewing a target portion from the top, and the phrase "on a cross-section" means viewing a cross-section formed by vertically cutting a target portion from the side. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter for spherical particles or length of the major axis for non-spherical particles) of about 20 particles at random in a scanning electron microscopic image. In addition, the average particle diameter may be measured by any suitable method that may be utilized by those skilled in the art, for example, may be measured by a particle size analyzer, and/or may be measured by a transmission electron microscopic image and/or a scanning electron microscopic image. Alternatively, it is possible to obtain an average particle diameter value by measuring using a dynamic light scattering method, performing data analysis, counting the number of particles for each particle size range, and calculating from this.

Herein, "or" is not to be construed as an exclusive meaning, for example, "A or B" is construed to include A, B, A+B, and/or the like.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

It will be understood that, although the terms first, second, etc. may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the terms "use," "using," and "used" may be considered synonymous with the terms "utilize," "utilizing," and "utilized," respectively.

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, are inclusive of the stated value and mean within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

"Metal" is interpreted as a concept including ordinary metals, transition metals and/or metalloids (semi-metals).

### Positive Electrode Active Material

Some embodiments provide a positive electrode active material including a core particle including a layered lithium nickel-manganese-based composite oxide, a first coating layer provided on the surface of the core particle and including Al, and a second coating layer provided on the first coating layer and including Ni.

Recently, as a price of cobalt, a rare metal, has sharply soared (e.g., has significantly increased), there has been an increase in demand or desire for development of positive electrode active materials excluding (not including) cobalt (e.g., cobalt-free) or including it in a reduced amount. Among them, positive electrode active materials with an olivine-based crystal structure (such as lithium iron phosphate (LFP), lithium manganese phosphate (LMP), and/or lithium manganese iron phosphate (LMFP)), and/or spinel crystal structures (such as lithium manganese oxide (LMO)) have limitations in realizing high capacity due to a relatively small available lithium amount within the structure. Nickel-manganese-based positive electrode active materials with a layered structure may exhibit excellent or improved capacity and efficiency characteristics due to a relatively large available lithium amount in the structure and thus may be suitable for high-capacity batteries, but because cobalt, which plays an important (or even key) role in the layered structure, is excluded, structural stability may deteriorate and resistance may increase and thereby, the active material may fail in securing suitable long-term cycle-life characteristics. In addition, as the cobalt is excluded (is not included), an undesirable side reaction of the positive electrode active material with an electrolyte may be accelerated under high-voltage and high-temperature conditions, causing a problem of increasing a gas generation amount and deteriorating cycle-life characteristics.

According to some embodiments, by introducing a first coating layer and a second coating layer on the surface of the layered lithium nickel-manganese-based composite oxide core particle, capacity and efficiency are maximized or increased and an amount of gas generation even under high voltage and/or high temperature conditions is reduced, thus providing a positive electrode active material having suitably long cycle-life characteristics.

### Core Particles

The core particles include lithium nickel-manganese-based composite oxide. A nickel content (e.g., amount) in the lithium nickel-manganese-based composite oxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of total metal excluding lithium in the lithium nickel-manganese-based composite oxide. If (e.g., when) the nickel content (e.g., amount) satisfies any of the above ranges, suitably high capacity can be achieved and structural stability can be increased even if the cobalt content (e.g., amount) is reduced.

A manganese content (e.g., amount) may be, for example, greater than or equal to about 10 mol%, for example, about 10 mol% to about 40 mol%, about 15 mol% to about 35 mol%, about 15 mol% to about 30 mol%, or about 20 mol% to about 30 mol% based on 100 mol% of total metal excluding lithium in the lithium nickel-manganese-based composite oxide. If (e.g., when) the manganese content (e.g., amount) satisfies any of the above ranges, the positive electrode active material may improve structural stability while realizing suitably high capacity.

For example, the lithium nickel-manganese-based composite oxide may be, for example, a lithium nickel-manganese-aluminium-based composite oxide that further includes aluminium in addition to nickel and manganese. If (e.g., when) the composite oxide includes aluminium, it is advantageous to maintain a suitably stable layered structure even if the cobalt element is excluded from (not included in) the structure. The aluminium content (e.g., amount) based on 100 mol% of the lithium nickel-manganese-aluminium-based composite oxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol%. If the aluminium content (e.g., amount) satisfies any of the above ranges, a suitably stable layered structure may be maintained even if cobalt is excluded, the problem of structure collapse due to charging and discharging may be suppressed or reduced, and suitably long cycle-life characteristics of the positive electrode active material may be realized.

According to some embodiments, a concentration of aluminium within the core particle may be uniform or substantially uniform. For example, it means or refers to that there is no concentration gradient of aluminium from the center to the surface within the core particle, or that the aluminium concentration outside the core particle is neither substantially higher nor substantially lower than that inside the core particle, and that the aluminium within the core particle is evenly or substantially evenly distributed. According to the present embodiments, such structure may be obtained by synthesizing a composite oxide using nickel-manganese-aluminium-based hydroxide as a precursor by using aluminium raw materials during precursor preparation without additional doping of aluminium during the synthesis of the core particles. The core particle may be in the form of a secondary particle in which a plurality of primary particles are agglomerated, and the aluminium content (e.g., amount) inside the primary particle may be the same or similar regardless of the location of the primary particle within the secondary particle. For example, if (e.g., when) one primary particle is selected from any position in the cross-section of one secondary particle to measure the aluminium content (e.g., amount) not on the interface of the primary particle but inside the primary particle, the aluminium content (e.g., amount) may be the same/similar/substantially uniform regardless of the location of the primary particle, that is, whether or not the primary particle is close to the center of the secondary particle or to the surface. In this structure, even though cobalt is absent, or is present in a very small amount (e.g. less than 0.1 mol% based on 100 mol% of all metals excluding lithium), the layered structure may be suitably stably maintained, and aluminium by-products and/or aluminium agglomerates may not be generated (or may substantially not be generated), thus simultaneously (or concurrently) improving capacity, efficiency, and cycle-life characteristics of the positive electrode active material.

The lithium nickel-manganese-based composite oxide may be represented by Chemical Formula 1.

Chemical Formula 1 Liₐ₁Niₓ₁Mn_{y1}Al_{z1}M¹_{w1}O_{2-b1}X_{b1}.

In Chemical Formula 1, 0.9≤a1≤1.8, 0.6≤x1≤0.8, 0.1≤y1≤0.4, 0≤z1≤<0.03, 0 ≤w1≤0.3, 0.9≤x1+y1+z1+w1≤1.1, and 0≤b1≤0.1, M¹ may be one or more elements selected from among B, Ba, Ca, Ce, Cr, Fe, Mg, Mo, Nb, Si, Sn, Sr, Ti, V, W, Y, and Zr, and X may be one or more elements selected from among F, P, and S.

In Chemical Formula 1, for example, 0.9≤a1≤1.5, or 0.9≤a1≤1.2. If Chemical Formula 1 includes aluminium, it may satisfy 0.6≤x1≤0.8, 0.1≤y1≤0.39, 0.01 ≤z1≤<0.03, and 0≤w1≤0.29, for example, 0.6≤x1≤0.8, 0.1≤y1≤0.39, 0.01<z1≤<0.03, and 0≤w1≤0.29.

In Chemical Formula 1, for example, 0.6≤x1≤0.79, 0.6≤x1≤0.78, 0.6≤x1≤ 0.75, 0.65≤x1≤0.8, or 0.7≤x1≤0.79; 0.1≤y1≤0.35, 0.1≤y1≤0.30, 0.1≤y1≤0.29, 0.15≤ y1≤0.39, or 0.2≤y1≤0.3; 0.01≤z1≤0.025, 0.01<z1≤0.02, or 0.01<z1≤0.019; and 0≤w1 ≤0.28, 0≤w1 ≤0.27, 0≤w1 ≤0.26, 0≤w1 ≤0.25, 0≤w1 ≤0.24, 0≤w1 ≤0.23, 0≤w1 ≤0.22, 0 ≤w1≤0.21, 0≤w1≤0.2, 0≤w1≤0.15, 0≤w1 ≤0.1, or 0≤w1 ≤0.09.

The lithium nickel-manganese-based composite oxide may be a cobalt-free compound that does not include cobalt or that includes a very or substantially small amount of cobalt. For example, the lithium nickel-manganese-based composite oxide may have a cobalt content (e.g., amount) of about (e.g., greater than) 0 mol% to about 0.01 mol% (e.g., at most 0.01 mol%) based on 100 mol% of all metals excluding lithium.

The core particle may be in the form of secondary particles made by agglomerating a plurality of primary particles. The secondary particles may be spherical, elliptical, polyhedral, and/or irregular-shaped, and the primary particles may be spherical, elliptical, plate-shaped, or a combination thereof.

The core particles are susceptible to chemical attack from components in the electrolyte if (e.g., when) the battery is operated under high voltage and/or high temperature conditions, and undesirable side reactions with the electrolyte may occur. As a result, the amount of gas generated may be unsuitably or undesirably high, which reduces battery cycle-life and safety. These problems can be solved by introducing a coating layer according to the present embodiments which will be discussed in more detail herein below.

### First Coating Layer

The Al content (e.g., amount) in the first coating layer may be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of all metals excluding lithium in the positive electrode active material. These ranges correspond only to the content (e.g., amount) of aluminium contained in the first coating layer, separately from (e.g., not including) the aluminium that may be contained in the core particles. The aluminium content in the first coating layer can be measured, for example, through SEM-EDS analysis of the surface or cross section of the positive electrode active material. If the aluminium content in the first coating layer satisfies any of the above ranges, it is possible to form a coating layer of uniform (or substantially uniform) and suitable thin thickness, the resistance of the positive electrode active material may not increase (or may not substantially increase), and side reactions with the electrolyte may be effectively or suitably suppressed or reduced, so that the cycle-life characteristics of rechargeable lithium batteries can be improved under high-voltage and/or high-temperature conditions. For example, if the aluminium content of the first coating layer is excessive, a uniform (or substantially uniform) coating layer may not be formed and/or resistance may undesirably increase, which may reduce charging and discharging efficiency and cycle-life characteristics, and if the aluminium content of the first coating layer is too small, a coating layer of an appropriate or suitable thickness may not be formed, which may reduce the effect of suppressing or suitably reducing side reactions with the electrolyte.

The first coating layer may be in the form of a film that continuously covers the surface of the core particle, for example, may be in the form of a shell that covers the entire (or substantially the entire) surface of the core particle. This is distinguished from (e.g., contrasted with) a structure in which the coating layer is coated on a portion of the surface of the core particle. According to some embodiments, because the first coating layer may be formed to completely cover the surface of the core particle but still have a very or suitably thin and uniform (or substantially uniform) thickness, the positive electrode active material may not exhibit an increase (e.g., an undesirable increase) in resistance or deteriorate (e.g., undesirably deteriorate) capacity, but may instead improve structural stability, effectively or suitably suppress side reaction(s) with an electrolyte, reduce amount of gas generation, and, realize suitable long-term cycle-life characteristics.

A thickness of the first coating layer may be about 5 nanometers (nm) to about 40 nm, for example, about 5 nm to about 30 nm, or about 5 nm to about 20 nm. If (e.g., when) the first coating layer satisfies any of the above thickness ranges, the structural stability of the positive electrode active material may be improved without increasing resistance or reducing capacity due to the coating, and the side reaction(s) with the electrolyte may be effectively or suitably suppressed or reduced. The thickness of the first coating layer may be measured through, for example, SEM (scanning electron microscopy), TEM (transmission electron microscopy), TOF-SIMS (Time-of-Flight Secondary Ion Mass Spectrometry), XPS (X-ray photoelectron spectroscopy), and/or EDS (Energy-dispersive X-ray spectroscopy) analysis, for example, through TEM-EDS line profile.

The first coating layer may be thicker than the second coating layer, which will be described in more detail herein below.

The first coating layer of the positive electrode active material has a thickness of several to tens of nanometers and thus a suitably thin and substantially uniform thickness. For example, the first coating layer has a thickness deviation of less than or equal to about 20%, less than or equal to about 18%, or less than or equal to about 15% within one positive electrode active material particle. Herein, the thickness deviation of the first coating layer refers to a thickness of the first coating layer within one positive electrode active material particle. The thickness deviation of the first coating layer may be, for example, obtained by measuring thickness at each of about 10 points from an electron microscopic image of the cross-section of one positive electrode active material particle, calculating an arithmetic average thereof, and then, dividing an absolute value of a difference between one data set and the arithmetic average by the arithmetic average and multiplying by 100. If (e.g., when) the thickness deviation and/or standard deviation of the first coating layer satisfies any of the ranges, on the surface of the positive electrode active material particle, the first coating layer may be well or suitably formed as a film with a uniform (or substantially uniform) thickness and thus improve structural stability of the positive electrode active material and effectively or suitably suppress or reduce a side reaction with an electrolyte and minimize or reduce an increase in resistance and/or capacity deterioration due to the coating.

The first coating layer may include, for example, aluminium oxide, lithium-aluminium oxide, or a combination thereof. The first coating layer may have a layered structure. For example, the compound included in the first coating layer may have a layered structure.

The first coating layer may further include nickel, manganese, or a combination thereof, in addition to aluminium.

### Second Coating Layer

The Ni content (e.g., amount) in the second coating layer may be about 0.01 mol% to about 1 mol%, for example, about 0.01 mol% to about 0.9 mol%, about 0.01 mol% to about 0.7 mol%, about 0.05 mol% to about 0.5 mol%, or about 0.1 mol% to about 0.4 mol% based on 100 mol% of all metals excluding lithium in the positive electrode active material. The Ni content in the second coating layer can be measured, for example, through SEM-EDS analysis of the surface and/or cross section of the positive electrode active material. If the Ni content in the second coating layer satisfies any of the above ranges, it may be possible to form a coating layer of uniform (or substantially uniform) and suitably thin thickness, the resistance of the positive electrode active material may not increase (or undesirably increase), and side reactions (e.g., undesirable side reactions) with the electrolyte may be effectively or suitably suppressed or reduced, so that the cycle-life characteristics of rechargeable lithium batteries can be improved under high-voltage and/or high-temperature conditions. For example, if the Ni content of the second coating layer is excessive, a uniform (or substantially uniform) coating layer may not be formed and/or resistance may increase, which may reduce charging and discharging efficiency and cycle-life characteristics, and if the Ni content of the second coating layer is too small, a coating layer of an appropriate or suitable thickness may not be formed, an effect of suppressing or reducing side reactions with the electrolyte may be reduced, and/or charge/discharge efficiency and/or high-temperature cycle-life characteristics may be reduced.

The second coating layer may be in the form of a film and/or shell that continuously surrounds the surface of the first coating layer. According to some embodiments, because the second coating layer may be formed to completely cover the outermost surface of the positive electrode active material but still have a very or suitably thin and uniform (or substantially uniform) thickness, the positive electrode active material may not exhibit an increase (e.g., an undesirable increase) in resistance or deteriorate capacity, but may instead improve structural stability, effectively or suitably suppress or reduce side reaction(s) with an electrolyte, reduce a gas generation amount, and/or realize long-term cycle-life characteristics.

A thickness of the second coating layer may be less than or equal to about 10 nm, for example about 0.1 nm to about 10 nm, about 0.5 nm to about 9 nm, about 1 nm to about 7 nm, or about 1 nm to about 5 nm. If (e.g., when) the second coating layer satisfies any of the above thickness ranges, the structural stability of the positive electrode active material may be improved without increasing (or undesirably increasing) resistance or reducing (or undesirably reducing) capacity due to the coating, and the side reaction(s) with the electrolyte may be effectively or suitably suppressed or reduced. The thickness of the second coating layer may be measured through, for example, SEM, TEM, TOF-SIMS, XPS, and/or EDS analysis, for example, through TEM-EDS line profile.

The second coating layer may be thin, at the level of several nanometers, and may have a uniform (or substantially uniform) thickness. For example, the second coating layer has a thickness deviation of less than or equal to about 20%, less than or equal to about 18%, or less than or equal to about 15% within one positive electrode active material particle. Herein, the thickness deviation of the second coating layer refers to a thickness of the second coating layer within one positive electrode active material particle. The thickness deviation of the second coating layer may be, for example, obtained by measuring thickness at each of about 10 points from an electron microscopic image of the cross-section of one positive electrode active material particle, calculating an arithmetic average thereof, and then, dividing an absolute value of a difference between one data set and the arithmetic average by the arithmetic average and multiplying by 100. If (e.g., when) the thickness deviation and/or standard deviation of the second coating layer satisfies any of the above ranges, on the outermost surface of the positive electrode active material particle, the first coating layer may be well or suitably formed as a film with a uniform (or substantially uniform) thickness and thus improve structural stability of the positive electrode active material and effectively or suitably suppress or reduce side reaction(s) with an electrolyte and minimize or reduce an increase in resistance and/or capacity deterioration due to the coating.

The second coating layer may further include Al in addition to Ni. The second coating layer may include, for example, nickel oxide, lithium-nickel oxide, aluminium-nickel oxide, lithium-aluminium-nickel oxide, or a combination thereof. The second coating layer may have a layered structure. Because the core, the first coating layer, and the second coating layer may all have a layered crystal structure, intercalation and deintercalation of lithium may be further promoted.

In some embodiments, the first coating layer may be thicker than the second coating layer. For example, a ratio of the thickness of the second coating layer to the thickness of the first coating layer may be less than about 0.5, for example, less than or equal to about 0.4, or less than or equal to about 0.3. If the thicknesses of the first coating layer and the second coating layer satisfy this relationship, structural stability of the positive electrode active material may be improved without increasing (e.g., undesirably increasing) resistance or decreasing (e.g., undesirably decreasing) capacity due to the coating, and the positive electrode active material may effectively or suitably suppress or reduce side reactions with the electrolyte to improve high-voltage characteristics and/or high-temperature characteristics.

The Al content (e.g., amount) of the first coating layer may be greater than the Ni content of the second coating layer. Herein, the content may refer to a molar content and may refer to the molar content relative to 100 mol% of metals excluding lithium in the positive electrode active material. For example, a ratio of the Ni content of the second coating layer to the Al content of the first coating layer may be less than about 0.5, for example, less than or equal to about 0.4, or less than or equal to about 0.3. If the contents of Al in the first coating layer and Ni in the second coating layer satisfy this relationship, structural stability of the positive electrode active material may be improved without increasing (e.g., undesirably increasing) resistance or decreasing (e.g., undesirably decreasing) capacity due to the coating, and side reactions with the electrolyte may be effectively or suitably suppressed or reduced to improve high-voltage characteristics and/or high-temperature characteristics.

### Grain Boundary Coating Portion

According to one or more embodiments, during the process of forming the first coating layer, aluminium may diffuse into the core particles. Accordingly, the positive electrode active material according to some embodiments may further include a grain boundary coating portion located on the surface of the primary particles inside the secondary particle and containing the aluminium. Herein, the secondary particle refers to the core particle, and the inside of the secondary particles may refer to the entire internal portion excluding the surface of the secondary particle, for example, a region to about 60 length% of a radius of the secondary particle from the center toward the surface. The grain boundary coating portion is a separate concept from the coating layer on the core particle surface and refers to a coating portion on the surface of the primary particles inside the core particle. The presence of the grain boundary coating portion may be checked by using an SEM-EDS analysis of the electrode active material cross-section and/or the like. If (e.g., when) the aluminium grain boundary coating portion is formed, the positive electrode active material may be further structurally stabilized, and cycle-life characteristics may be improved.

The aluminium content (e.g., amount) in the grain boundary coating portion is not particularly limited but, for example, may be smaller than the aluminium content in the coating layer.

In some embodiments, the grain boundary coating portion may further include nickel, manganese, yttrium, or a combination thereof in addition to aluminium.

The average particle diameter (D₅₀) of the positive electrode active material (e.g., in the form of the secondary particle(s)) according to some embodiments is not particularly limited, but may be, for example, about 1 micron or micrometer (µm) to about 25 µm, about 5 µm to about 20 µm, about 10 µm to about 20 µm, about 11 µm to about 18 µm, or about 12 µm to about 15 µm. The average particle diameter may refer to a diameter (D₅₀) of particles (e.g., of the secondary particle(s)) having a cumulative volume of 50 volume% in the particle size distribution that is obtained by measuring the size (diameter or length of the major axis) of about 20 particles at random in a scanning electron microscopic image of the positive electrode active materials. If (e.g., when) the average particle diameter of the positive electrode active material satisfies any of the above ranges, suitably high capacity and/or long cycle-life can be realized and it can be advantageous to form a coating layer according to some embodiments.

In the positive electrode active material according to some embodiments, a cobalt content (e.g., amount) may be, for example, less than or equal to about 0.01 mol%, less than or equal to about 0.005 mol%, less than or equal to about 0.001 mol%, or, for example, about 0 mol% to about 0.01 mol% based on 100 mol% of all metals excluding lithium. According to some embodiments, the positive electrode active material may be, for example, a cobalt-free positive electrode active material.

In one or more embodiments, a positive electrode active material according to some embodiments may not include (e.g., may exclude) sodium. Sodium ions may be used in a process of preparing a positive electrode active material, but according to a preparing method described in more detail herein below, core particles with a suitably stable structure and a coating layer with a uniform (or substantially uniform) thickness may be formed without using the sodium ions.

### Method of Preparing Positive Electrode Active Material

In one or more embodiments, a method for preparing a positive electrode active material includes mixing a layered nickel-manganese composite hydroxide and a lithium raw material and performing a first heat treatment to obtain a lithium nickel-manganese-based composite oxide; adding an Al raw material to an aqueous solvent, adding the lithium nickel-manganese composite oxide thereto and mixing them, then adding a Ni raw material and mixing them; and drying the mixture and performing a second heat treatment. The positive electrode active material according to the present embodiments can be manufactured through the above method.

The layered nickel-manganese-based composite hydroxide is a precursor of core particles, and may be in the form of secondary particles in which a plurality of primary particles are agglomerated, and may not contain cobalt or may contain a very small amount of cobalt (e.g. less than 0.1 mol% based on 100 mol% of all metals excluding lithium). For example, it may be a cobalt-free nickel-manganese-based composite hydroxide. The nickel-manganese-based composite hydroxide (or nickel-manganese-aluminium-based composite hydroxide) can be prepared by a suitable coprecipitation method.

The nickel content (e.g., amount) in the layered nickel-manganese-based composite hydroxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of total metal. If (e.g., when) the nickel content (e.g., amount) satisfies the above range, suitably high capacity can be achieved and structural stability can be increased even if the cobalt content (e.g., amount) is reduced.

A manganese content (e.g., amount) in the layered nickel-manganese-based composite hydroxide may be greater than or equal to about 10 mol%, for example, about 10 mol% to about 40 mol%, about 15 mol% to about 39 mol%, about 15 mol% to about 35 mol%, about 15 mol% to about 30 mol%, or about 20 mol% to about 30 mol%, based on 100 mol% of the total metal.

In one or more embodiments, if (e.g., when) the layered nickel-manganese-based composite hydroxide further includes aluminium, the aluminium content (e.g., amount) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on 100 mol% of total metal. If (e.g., when) the manganese and aluminium contents of the composite hydroxide satisfy any of the above ranges, suitably high capacity can be realized while structural stability of the positive electrode active material can be increased, and production price can be lowered to increase economic efficiency.

The method for preparing a positive electrode active material according to one or more embodiments, in which rather than additionally doping the core particles with aluminium, an aluminium raw material is used to prepare a precursor of the core particles, may use a nickel-manganese-aluminium-based composite hydroxide in which aluminium is evenly (or substantially evenly) dispersed within the structure as the precursor of the core particles. If (e.g., when) such a precursor is used, a layered structure of the positive electrode active material may be stably or suitably maintained without cobalt despite repeated charges and discharges, and aluminium by-products and/or aluminium agglomerates may not be formed (or may not be formed in an undesirable amount), which may improve capacity, efficiency characteristics, and cycle-life characteristics of the positive electrode active material.

In the layered nickel-manganese-based composite hydroxide, the cobalt content (e.g., amount) may be less than or equal to about 0.01 mol%, less than or equal to about 0.005 mol%, or less than or equal to about 0.001 mol% based on 100 mol% of the total metal. This nickel-manganese-based composite hydroxide may be suitably economical as it avoids the increase (e.g., an undesirable increase) in unit cost caused by cobalt, maximizes or increases capacity, and improves structural stability.

The layered nickel-manganese-based composite hydroxide may be represented by Chemical Formula 2.

Chemical Formula 2 Niₓ₂Mn_{y2}Al_{z2}M²_{w2}(OH)₂.

In Chemical Formula 2, 0.6≤x2≤0.8, 0.1≤y2≤0.4 0≤z2≤0.03, 0≤w2≤0.3, and 0.9≤x2+y2+z2+w2≤1.1, and M² may be one or more elements selected from among B, Ba, Ca, Ce, Cr, Fe, Mg, Mo, Nb, Si, Sn, Sr, Ti, V, W, Y and Zr.

In Chemical Formula 2, for example, 0.6≤x2≤0.8, 0.1≤y2≤0.39, 0.01≤z2≤ 0.03, and 0≤w2≤0.29.

The layered nickel-manganese-based composite hydroxide is in the form of particles, and the average particle diameter (D₅₀) of the particles may be about 10 µm to about 18 µm, about 11 µm to about 16 µm, or about 12 µm to about 15 µm.

The layered nickel-manganese-based composite hydroxide and lithium raw material may be mixed in a mole ratio of about 1:0.9 to about 1:1.8, for example, about 1:0.9 to about 1:1.5 or about 1:0.9 to about 1:1.2. The first heat treatment may be performed under an oxygen atmosphere, for example, at about 750 °C to about 950 °C, about 780 °C to about 900 °C, or about 810 °C to about 890 °C for about 2 hours to about 20 hours or about 4 hours to about 12 hours. Through the first heat treatment, lithium nickel-manganese-based composite oxide may be obtained. The obtained composite oxide is substantially the same as that described for the core particles in the positive electrode active material section.

The layered lithium nickel-manganese-based composite oxide has a significantly different residual lithium content (e.g., amount) and different surface characteristics from an oxide with other compositions, for example, a comparable nickel-based oxide such as a lithium nickel-cobalt-manganese-based composite oxide and/or a lithium nickel-cobalt-aluminium-based composite oxide, and/or the like. As such, comparable coating methods may not succeed in forming a good or suitable coating layer thereon in the form of a uniform (or substantially uniform) film. Some embodiments provide a method of improving high-voltage characteristics by forming the coating layer with a uniform (or substantially uniform) and very or suitably thin thickness on the surface of lithium nickel-manganese-based composite oxide having a very small cobalt content (e.g., less than 0.1 mol% based on 100 mol% of all metals excluding lithium) and a nickel content (e.g., amount) of about 60 mol% or more.

In one or more embodiments, after adding an Al raw material to an aqueous solvent and mixing them, a layered lithium nickel-manganese-based composite oxide is added thereto and mixed therewith to induce formation of a first coating layer on the layered lithium nickel-manganese-based composite oxide particles (core particles). Subsequently, formation of a second coating layer is induced by adding a Ni raw material to the mixed solution and then, mixing them. After removing the solvent from the mixed solution and drying the residue, a second heat treatment may proceed to obtain a positive electrode active material in which the Al-containing first coating layer and the Ni-containing second coating layer are sequentially formed on the surface of the core particles. This may be called or referred to as a continuous wet coating method.

The aqueous solvent may include distilled water, an alcohol-based solvent, and/or any suitable combination thereof. The Al raw material may include, for example, aluminium nitrate, aluminium sulfate, aluminium carbonate, aluminium hydroxide, and/or any suitable combination thereof. For example, the Al raw material may include aluminium sulfate, and in this case, it is advantageous to form the first coating layer with a uniform (or substantially uniform) thickness on the surface of the lithium nickel-manganese-based composite oxide particles.

The Al raw material is a raw material for forming a coating layer, and the Al content (e.g., amount) in the Al raw material may be designed or selected to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of the total metal excluding lithium in the finally obtained positive electrode active material. By designing the Al coating content (e.g., amount) within any of the above ranges, it may be possible to form a first coating layer with a suitably thin thickness of several to tens of nanometers and a uniform (or substantially uniform) thickness, reduce the amount of gas generated by the rechargeable lithium battery under high voltage and/or high temperature operating conditions, and achieve a suitably high capacity and long cycle-life characteristics.

A solution in which Al raw material is added to an aqueous solvent may have a pH of about 1.5 to about 3.5, for example, about 2.0 to about 3.4, about 2.5 to about 3.3, about 2.7 to about 3.3, or about 2.9 to about 3.2. Dropping and mixing the lithium nickel-manganese-based composite oxide into an aqueous solvent mixed with the aluminium raw material may be carried out for about 5 minutes to about 80 minutes, about 5 minutes to about 60 minutes, or about 5 minutes to about 40 minutes. After the stirring, the mixed solution may have pH of about 4.5 to about 8.5, for example, about 5.0 to about 8.0, about 5.5 to about 7.5, or about 6.0 to about 7.0. If (e.g., when) these conditions are satisfied, it may be possible to form the first coating layer with a uniform (or substantially uniform) thickness.

The Ni raw material may include, for example, nickel nitrate, nickel sulfate, nickel carbonate, nickel hydroxide, and/or any suitable combination thereof. The Ni content (e.g., amount) in the Ni raw material may be designed or selected to be about 0.01 mol% to about 1 mol%, for example, about 0.01 mol% to about 0.9 mol%, about 0.01 mol% to about 0.7 mol%, 0.05 mol% to about 0.5 mol%, or about 0.1 mol% to about 0.4 mol% based on 100 mol% of all metals excluding lithium in the positive electrode active material. By designing the Ni coating content (e.g., amount) within any of the above ranges, it may be possible to form a second coating layer with a suitably thin thickness of several nanometers and a uniform (or substantially uniform) thickness, thus improving the performance of rechargeable lithium batteries under high voltage and/or high temperature operating conditions and providing suitably high capacity and long cycle-life characteristics.

The adding and mixing of the Ni raw material may be performed for about 5 to about 80 minutes, or about 5 to about 60 minutes, or about 10 to about 40 minutes. The pH of the final mixed solution after stirring may be about 4.5 to about 8.5, for example, about 5.0 to about 8.0, about 5.5 to about 7.5, or about 6.0 to about 7.0. If (e.g., when) these conditions are satisfied, it may be possible to form a second coating layer of uniform (or substantially uniform) thickness.

The removing of the solvent and drying of the mixed solution may be performed, for example, at about 40 °C to about 240 °C, about 100 °C to about 220 °C, or about 150 °C to about 200 °C.

The second heat treatment may be, for example, in an oxygen atmosphere in a temperature range of about 700 °C to about 850 °C, about 750 °C to about 840 °C, or about 800 °C to about 830 °C for about 2 to about 20 hours, or about 3 to about 10 hours. The second heat treatment temperature may be lower than the first heat treatment temperature, and the second heat treatment time may be the same as or shorter than the first heat treatment time. The desired or suitable coating layer may be obtained by performing a second heat treatment under these conditions.

### Positive Electrode

In one or more embodiments, a positive electrode includes a positive electrode current collector and a positive electrode active material layer on the positive electrode current collector, wherein the positive electrode active material layer includes the positive electrode active material according to the present embodiments. The positive electrode active material layer may further include other types (kinds) of positive electrode active materials in addition to the positive electrode active materials described above. In some embodiments, the positive electrode active material layer may optionally further include a binder, a conductive material, and/or any suitable combination thereof.

According to one or more embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². A density of the positive electrode active material layer in the final compressed positive electrode may be about 3.3 g/cc to about 3.7 g/cc, for example, about 3.3 g/cc to about 3.6 g/cc, or about 3.4 g/cc to about 3.58 g/cc. If (e.g., when) applying the positive electrode active material according to one or more embodiments, it is advantageous to implement the loading level and positive electrode density according to any of the above ranges, and a positive electrode that satisfies the loading level and positive electrode density in any of the above ranges may be suitable for implementing (e.g., applying) a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material (e.g., electron conductor) is included to provide or improve electrode conductivity and any suitable electrically conductive material may be used as a conductive material unless it causes an undesirable chemical change in the battery. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminium, silver, and/or the like; a conductive polymer such as a polyphenylene derivative; and/or any suitable mixture thereof.

A content (e.g., amount) of the binder and the conductive material may be about 0.5 wt% to about 5 wt%, respectively, based on 100 wt% of the positive electrode active material layer.

The positive electrode current collector may include Al, but the present disclosure is not limited thereto.

### Rechargeable Lithium Battery

Some embodiments provide a rechargeable lithium battery including the positive electrode according to the present embodiments, a negative electrode, and an electrolyte. As an example, the rechargeable lithium battery may include a positive electrode, a negative electrode, a separator between the positive electrode and the negative electrode, and an electrolyte.

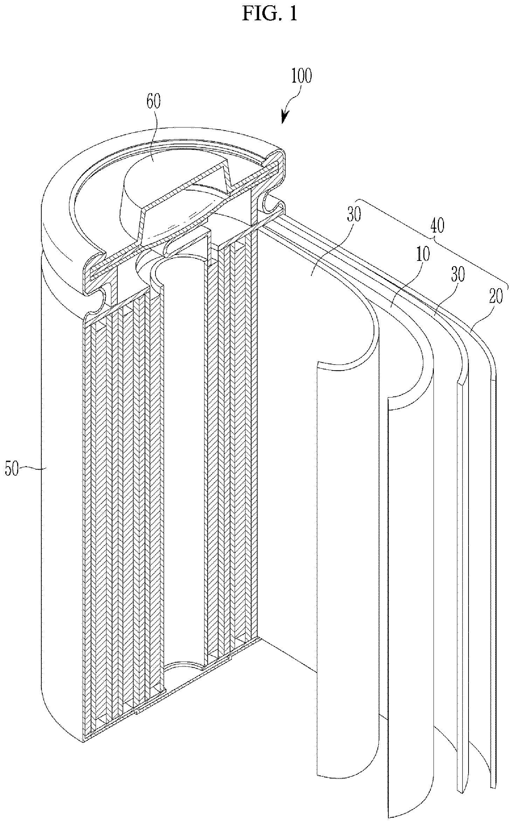

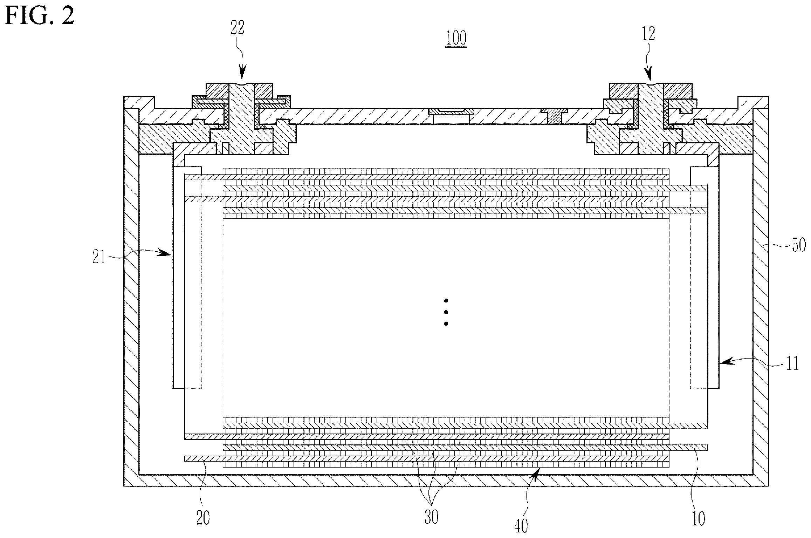

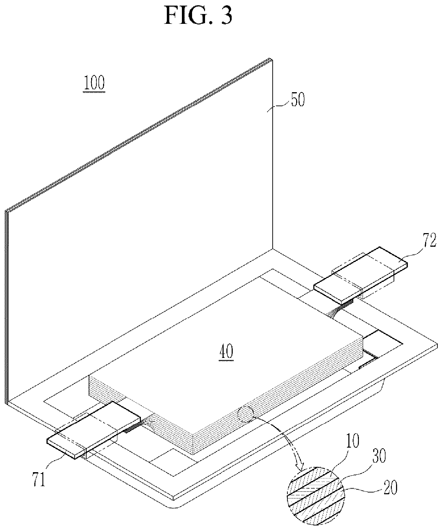

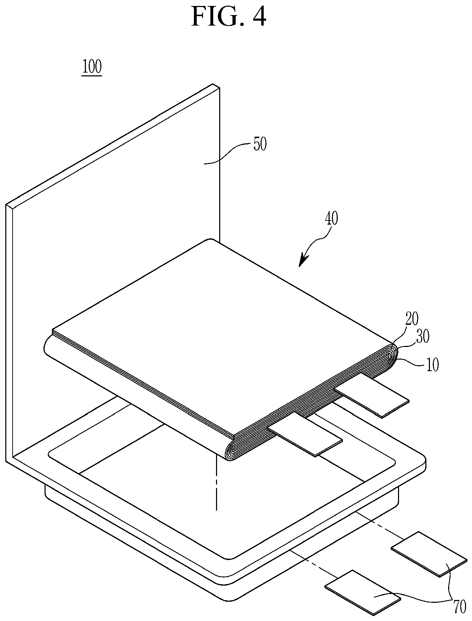

The rechargeable lithium battery may be classified into cylindrical, prismatic, pouch, coin, and/or the like depending on the shape. FIGS. 1 to 4 are schematic views illustrating rechargeable lithium batteries according to one or more embodiments. FIG. 1 shows a cylindrical battery, FIG. 2 shows a prismatic battery, and FIGS. 3 and 4 show pouch-type or kind batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 sealing the case 50 as shown in FIG. 1. In one or more embodiments, in FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 includes an electrode tab 70 that includes a positive electrode tab 71 and a negative electrode tab 72 serving as an electrical path for inducing the current formed in the electrode assembly 40 to the outside.

The rechargeable lithium battery according to one or more embodiments may be rechargeable at a relatively high voltage, or may be suitable for being driven at a relatively high voltage. For example, a charging voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to one or more embodiments, the rechargeable lithium battery can significantly reduce an amount of gas generated even if (e.g., when) charged at relatively high voltage and can achieve suitably high capacity and long cycle-life characteristics.

### Negative Electrode

The negative electrode may include a current collector and a negative electrode active material layer on the current collector, and may further include a negative electrode active material, a binder, a conductive material, and/or any suitable combination thereof.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous carbon, and/or any suitable combination thereof as a carbon-based negative electrode active material. The crystalline carbon may be irregular-shaped, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or any suitable combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and/or any suitable combination thereof), and/or any suitable combination thereof. The Sn-based negative electrode active material may be Sn, SnO_{y} (0 < y ≤ 2), e.g., SnO₂, a Sn alloy, and/or any suitable combination thereof.

The silicon-carbon composite may be a composite of silicon and amorphous carbon. An average particle diameter (D₅₀) of the silicon-carbon composite particles (e.g., secondary particles) may be, for example, about 0.5 µm to about 20 µm. According to one or more embodiments, the silicon-carbon composite may be in the form of silicon particles and amorphous carbon coated on the surface of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or any suitable combination thereof. The amorphous carbon may include soft carbon and/or hard carbon, a mesophase pitch carbonized product, and/or calcined coke.

If (e.g., when) the silicon-carbon composite includes silicon and amorphous carbon, a content (e.g., amount) of silicon may be about 10 wt% to about 50 wt% and a content of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

In one or more embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as (e.g., may be formed of) silicon alone, may exist in the form of a silicon alloy, and/or in an oxidized form. The oxidized form of silicon may be represented by SiOₓ (0<x≤2). At this time, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

The Si-based negative electrode active material and/or Sn-based negative electrode active material may be mixed with the carbon-based negative electrode active material. If (e.g., when) the Si-based negative electrode active material and/or Sn-based negative electrode active material and the carbon-based negative electrode active material are mixed and utilized, the mixing ratio may be a weight ratio of about 1:99 to about 90:10.

### Binder

The binder serves to suitably or well adhere the negative electrode active material particles to each other and also to adhere the negative electrode active material to the current collector. The binder may be a non-aqueous binder, an aqueous binder, a dry binder, and/or any suitable combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or any suitable combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or any suitable combination thereof.

If (e.g., when) an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or any suitable combination thereof.

### Conductive Material

The conductive material (e.g., electron conductor) is included to provide electrode conductivity and any suitable electrically conductive material may be used as a conductive material unless it causes an undesirable chemical change in the battery. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminium, silver, and/or the like; a conductive polymer such as a polyphenylene derivative; and/or any suitable mixture thereof.

A content (e.g., amount) of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, and/or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may include a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, a ether-based solvent, a ketone-based solvent, an alcohol-based solvent, an aprotic solvent, and/or any suitable combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (e.g., when) two or more types (kinds) are utilized in a mixture, a mixing ratio can be appropriately or suitably adjusted according to the desired or suitable battery performance, which should be understood by those of ordinary skill in the art.

If (e.g., when) using a carbonate-based solvent, a cyclic carbonate and a chain carbonate may be mixed and utilized, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables or facilitates a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte has appropriate or suitable ionic conductivity and viscosity, and thus excellent or suitable performance can be achieved and lithium ions can move effectively or suitably.

### Separator

Depending on the type or kind of the rechargeable lithium battery, a separator may be present between the positive electrode and the negative electrode. The separator may include polyethylene, polypropylene, polyvinylidene fluoride, and/or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or any suitable combination thereof on a surface (e.g., on one or both surfaces (e.g., opposite surfaces or sides)) of the porous substrate.

The porous substrate may be a polymer film formed of any one selected from among polymer polyolefin (such as polyethylene and/or polypropylene), polyester (such as polyethylene terephthalate and/or polybutylene terephthalate), polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and/or polytetrafluoroethylene (TEFLON^{®}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include: a structural unit derived from (meth)acrylamidosulfonic acid or a salt thereof; and a (meth)acryl-based copolymer including a first structural unit derived from (meth)acrylamide, and a second structural unit including at least one of a structural unit derived from (meth)acrylic acid or a structural unit derived from (meth)acrylate.

The inorganic material may include (e.g., in the form of) inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or any suitable combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail herein below. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed in a mole ratio of 1:1 and then, primarily heat-treated at 850 °C under an oxygen atmosphere for 8 hours to prepare a composite oxide in the form of secondary particles having a composition of LiNi_{0.75}Mn_{0.23}Al_{0.02}O₂ and an average particle diameter (D₅₀) of about 14 µm.

After mixing aluminium sulfate with a distilled water solvent, the prepared composite oxide was added thereto and then, mixed for 20 minutes to 60 minutes. Herein, an aluminium content (e.g., amount) in the aluminium sulfate was designed (e.g., set) to be 1.0 mol% based on 100 mol% of total metals excluding lithium in the final positive electrode active material. Next, nickel sulfate was added and mixed for about 10 to 40 minutes. Herein, the nickel content (e.g., amount) in nickel sulfate was designed (or set) to be 0.2 mol% based on 100 mol% of all metals excluding lithium in the final positive electrode active material. After removing the solvent from the mixed solution and drying the latter at 190 °C, a second heat treatment was performed at 825 °C for 8 hours in an oxygen atmosphere to prepare the final positive electrode active material.

### 2. Manufacture of Rechargeable Lithium Battery Cell

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminium foil current collector and then, dried and compressed to manufacture a positive electrode. Herein, the positive electrode active material layer had a loading level of 10 mg/cm², and the final compressed positive electrode had density of about 3.4 g/cc.

97.5 wt% of a graphite negative electrode active material, 1.5 wt% of carboxymethyl cellulose, and 1 wt% of a styrene butadiene rubber in a water solvent were mixed to prepare a negative electrode active material layer slurry. The negative electrode active material layer slurry was coated on a copper foil current collector and then, dried and compressed to manufacture a negative electrode.

A polytetrafluoroethylene separator was used, and an electrolyte prepared by dissolving 1 M LiPF₆ in a mixed solvent of ethylene carbonate and dimethyl carbonate in a volume ratio of 3:7 was used to manufacture a rechargeable lithium battery cell using one or more suitable methods in the art.

### Comparative Example 1

A positive electrode active material and a rechargeable lithium battery cell were manufactured in substantially the same manner as in Example 1 except that a composite oxide of LiNi_{0.75}Mn_{0.23}Al_{0.02}O₂ itself, without the Al and Ni coating process, was used as the positive electrode active material.

### Comparative Example 2

A positive electrode active material and a rechargeable lithium battery cell were manufactured in substantially the same manner as in Example 1 except that the positive electrode active material was prepared by dry-coating Al alone without Ni coating.

The Al dry coating was performed in the following method. The positive electrode active material was prepared by mixing a composite oxide with a composition of LiNi_{0.75}Mn_{0.23}Al_{0.02}O₂ in the form of secondary particles with aluminium oxide powder and then, heat-treating the mixture under an oxygen atmosphere at 825 °C for 8 hours to dry-coat Al.

### Comparative Example 3

A positive electrode active material and a rechargeable lithium battery cell were manufactured in substantially the same manner as in Example 1 except that the positive electrode active material was prepared by wet-coating Al alone without Ni coating.

For example, the positive electrode active material was prepared by mixing aluminium sulfate with a distilled water solvent, adding composite oxide thereto to mix them for 20 minutes to 60 minutes, removing the solvent therefrom, drying the residue at 190 °C, and conducting a second heat treatment at 825 °C under an oxygen atmosphere for 8 hours.

### Comparative Example 4

A positive electrode active material and a rechargeable lithium battery cell were manufactured in substantially the same manner as in Example 1 except that the positive electrode active material was prepared by wet-coating Ni alone without Al coating.

For example, the positive electrode active material was prepared by adding a composite oxide to a distilled water solvent, adding nickel sulfate thereto to mix them (e.g., the resulting mixture) for about 10 minutes to 40 minutes, removing the solvent therefrom, drying the residue at 190 °C, and conducting a second heat treatment at 825 °C for 8 hours under an oxygen atmosphere.

### Evaluation Example 1: Analysis of Positive Electrode Active Material

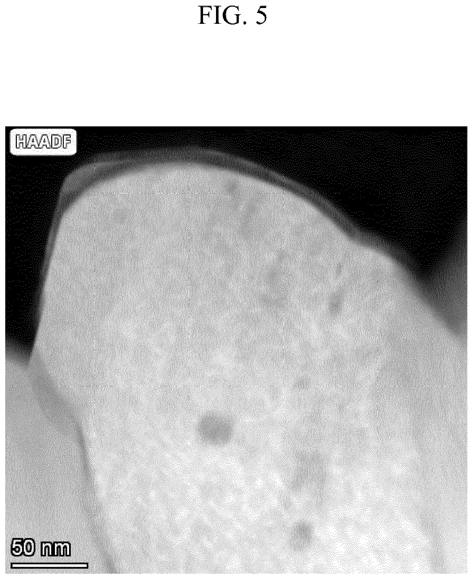

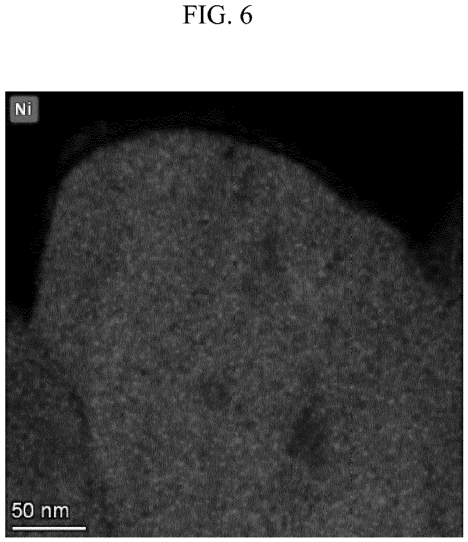

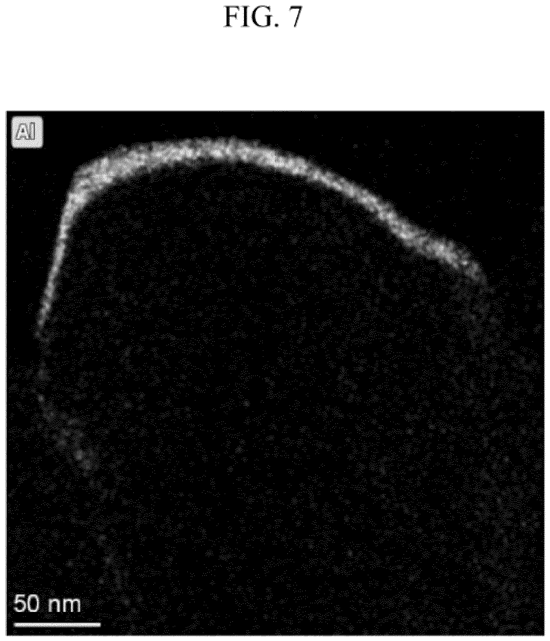

The positive electrode active material particles prepared in Example 1 were cut with a forced ion beam (FIB) to obtain cross-sections, which were examined through EDS and HR-STEM analysis. FIG. 5 is an HR-STEM image of the positive electrode active material cross-section of Example 1, which is an image obtained by enlarging primary particles located on the outermost surface in the cross-sections of the secondary particles. FIG. 6 is an image highlighting nickel elements through the EDS analysis in FIG 5, and FIG. 7 is an image highlighting aluminium elements through the EDS analysis in FIG. 5. Referring to FIGS. 5 to 7, on the surface of the secondary particles, a first coating layer containing Al was formed with a uniform (or substantially uniform) thickness, and on the first coating layer, a second coating layer containing Ni was formed with a uniform (or substantially uniform) thickness, which all formed an overall uniform (or substantially uniform) double coating layer, providing a positive electrode active material with a double core-shell structure.

### Evaluation Example 2: Charge and Discharge Characteristics and High-temperature Cycle-life Characteristics

The rechargeable lithium battery cells according to Example 1 and Comparative Examples 1 to 4 were charged to 4.45 V at a constant current of 0.2 C and to 0.05 C at a constant voltage and then, discharged to 3.0 V at 0.2 C at 25 °C as initial charge and discharge, and initial discharge capacity of the cells is shown in Table 1.

Subsequently, the cells were 25 times repeatedly charged at 1.0 C and discharged at 1.0 C within a voltage range of 3.0 V to 4.45 V at 45 °C, and then, a ratio of discharge capacity at the 25^{th} cycle to the initial discharge capacity was calculated, which is shown as high-temperature cycle-life in Table 1.

**(Table 1)**

| | Core Ni:Mn: Al | Al coating | | Ni coating | 4.45V initial discharge capacity (mAh/g) | High-temperature cycle-life (%, @25cyc) |
|---|---|---|---|---|---|---|
| Example 1 | 75:23:2 | 1.0 mol% | wet | 0.2 mol% | 197.0 | 93.30 |
| Comparative Example 1 | 75:23:2 | - | - | - | 193.9 | 61.60 |
| Comparative Example 2 | 75:23:2 | 1.0 mol% | dry | - | 195.6 | 75.10 |
| Comparative Example 3 | 75:23:2 | 1.0 mol% | wet | - | 195.2 | 88.90 |
| Comparative Example 4 | 75:23:2 | - | | 0.2 mol% | 95.5 | 87.7 |

Referring to Table 1, the rechargeable lithium battery cell of Example 1 exhibited excellent or improved initial discharge capacity and cycle-life characteristics, compared to the cells of Comparative Examples 1 to 4.

While this disclosure has been described in connection with what is presently considered to be practical example embodiments, it is to be understood that the disclosure is not limited to the disclosed embodiments. Rather, it is intended to cover one or more suitable modifications and equivalent arrangements included within the scope of the appended claims and their equivalents.

Embodiments are set out in the following clauses:
Clause 1. A positive electrode active material, comprising
   a core particle comprising a layered lithium nickel-manganese-based composite oxide,
   a first coating layer on a surface of the core particle and comprising aluminium (Al), and
   a second coating layer on the first coating layer and comprising nickel (Ni).
Clause 2. The positive electrode active material of clause 1, wherein in the layered lithium nickel-manganese-based composite oxide of the core particle,
   nickel is in an amount of 60 mol% to 80 mol% and manganese is in an amount of greater than or equal to 15 mol%, based on 100 mol% of all metals in the layered lithium nickel-manganese-based composite oxide excluding lithium.
Clause 3. The positive electrode active material of clause 1 or clause 2, wherein
   the layered lithium nickel-manganese-based composite oxide of the core particle further comprises aluminium and aluminium is in an amount of 1 mol% to 3 mol%, based on 100 mol% of all metals in the layered lithium nickel-manganese-based composite oxide excluding lithium.
Clause 4. The positive electrode active material of any one of clauses 1 to 3, wherein in the layered lithium nickel-manganese-based composite oxide of the core particle,
   cobalt is in an amount of at most 0.01 mol% based on 100 mol% of all metals in the layered lithium nickel-manganese-based composite oxide excluding lithium.
Clause 5. The positive electrode active material of any one of clauses 1 to 4, wherein
   the layered lithium nickel-manganese-based composite oxide of the core particle is represented by Chemical Formula 1:

      Chemical Formula 1 Liₐ₁Niₓ₁Mn_{y1}Al_{z1}M¹_{w1}O_{2-b1}X_{b1},
   in Chemical Formula 1, 0.9≤a1≤1.8, 0.6≤x1≤0.8, 0.1≤y1≤0.4, 0≤z1≤0.03, 0≤ w1≤0.3, 0.9≤x1+y1+z1+w1≤1.1, and 0≤b1≤0.1,
   M¹ is one or more elements selected from among B, Ba, Ca, Ce, Cr, Fe, Mg, Mo, Nb, Si, Sn, Sr, Ti, V, W, Y and Zr, and
   X is one or more elements selected from among F, P, and S.
Clause 6. The positive electrode active material of any one of clauses 1 to 5, wherein
   the first coating layer and the second coating layer are each in a form of a continuous film.
Clause 7. The positive electrode active material of any one of clauses 1 to 6, wherein
   a thickness of the first coating layer is 5 nm to 40 nm, and
   a thickness of the second coating layer is less than or equal to 10 nm.
Clause 8. The positive electrode active material of any one of clauses 1 to 7, wherein
   a ratio of a thickness of the second coating layer to a thickness of the first coating layer is less than 0.5.
Clause 9. The positive electrode active material of any one of clauses 1 to 8, wherein
   an Al amount in the first coating layer is 0.1 mol% to 2 mol% based on 100 mol% of all metals excluding lithium in the positive electrode active material, and
   a Ni amount in the second coating layer is 0.01 mol% to 1 mol% based on 100 mol% of all metals excluding lithium in the positive electrode active material.
Clause 10. The positive electrode active material of any one of clauses 1 to 9, wherein
   an Al amount in the first coating layer is 0.5 mol% to 1.5 mol% based on 100 mol% of all metals excluding lithium in the positive electrode active material, and
   a Ni amount in the second coating layer is 0.05 mol% to 0.5 mol% based on 100 mol% of all metals excluding lithium in the positive electrode active material.
Clause 11. The positive electrode active material of any one of clauses 1 to 10, wherein
   a ratio of a Ni amount in the second coating layer to an Al amount in the first coating layer is less than 0.5.
Clause 12. The positive electrode active material of any one of clauses 1 to 11, wherein
   the first coating layer comprises aluminium oxide, lithium-aluminium oxide, or a combination thereof, and
   the second coating layer comprises nickel oxide, lithium-nickel oxide, aluminium-nickel oxide, lithium-aluminium-nickel oxide, or a combination thereof.
Clause 13. The positive electrode active material of any one of clauses 1 to 12, wherein
   the first coating layer and the second coating layer have a layered structure.
Clause 14. The positive electrode active material of any one of clauses 1 to 13, wherein
   the core particle is in a form of a secondary particle made by agglomerating a plurality of primary particles, and
   the positive electrode active material further comprises a grain boundary coating portion comprising Al, the grain boundary coating portion being on surfaces of primary particles inside the of the secondary particle.
Clause 15. The positive electrode active material of clause 14, wherein
   an Al amount in the grain boundary coating portion is less than an Al amount in the first coating layer.
Clause 16. The positive electrode active material of any one of clauses 1 to 15, wherein
   the positive electrode active material is in a form of a secondary particle and the secondary particle has an average particle diameter (D₅₀) of 10 µm to 20 µm.
Clause 17. A method for preparing a positive electrode active material, the method comprising:
   mixing a layered nickel-manganese composite hydroxide and a lithium raw material and performing a first heat treatment to obtain a lithium nickel-manganese-based composite oxide,
   adding an aluminium (Al) raw material to an aqueous solvent, adding the lithium nickel-manganese composite oxide thereto and mixing them, then adding a nickel (Ni) raw material and mixing them, and
   drying the mixture and performing a second heat treatment.
Clause 18. The method of clause 17, wherein in the layered nickel-manganese-based composite hydroxide,
   nickel is in an amount of 60 mol% to 80 mol%,
   manganese is in an amount of greater than or equal to 15 mol%,
   aluminium is in an amount of at most 3 mol%, and
   cobalt is in an amount of at most 0.01 mol%,
   each of which based on 100 mol% of all metals in the layered nickel-manganese-based composite hydroxide.
Clause 19. The method of clause 17 or clause 18, wherein
   an Al amount in the Al raw material is 0.1 mol% to 2 mol% based on 100 mol% of all metals excluding lithium in the positive electrode active material, and
   a Ni amount in the Ni raw material is 0.01 mol% to 1 mol% based on 100 mol% of all metals excluding lithium in the positive electrode active material.
Clause 20. The method of any one of clauses 17 to 19, wherein
   the Al raw material comprises aluminium nitrate, aluminium sulfate, aluminium carbonate, aluminium hydroxide, or a combination thereof, and
   the Ni raw material comprises nickel nitrate, nickel sulfate, nickel carbonate, nickel hydroxide, or a combination thereof.
Clause 21. The method of any one of clauses 17 to 20, wherein
   a solution in which the Al raw material is added to the aqueous solvent has a pH of 1.5 to 3.5.
Clause 22. The method of any one of clauses 17 to 21, wherein
   the first heat treatment is performed at 750 °C to 950 °C, and
   the second heat treatment is performed at 700 °C to 850 °C.
Clause 23. A positive electrode, comprising:
   a positive electrode current collector, and
   a positive electrode active material layer on the positive electrode current collector,
   wherein the positive electrode active material layer comprises the positive electrode active material of any one of clauses 1 to 16.
Clause 24. The positive electrode of clause 23, wherein
   the positive electrode active material layer has a loading level of 10 mg/cm² to 40 mg/cm².
Clause 25. The positive electrode of clause 23 or clause 24, wherein
   the positive electrode active material layer has a density of 3.3 g/cc to 3.7 g/cc.
Clause 26. A rechargeable lithium battery, comprising:
   the positive electrode of any one of clauses 23 to 25,
   a negative electrode, and
   an electrolyte.
Clause 27. The rechargeable lithium battery of clause 26, wherein
   a charging voltage of the rechargeable lithium battery is greater than or equal to 4.45 V.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising
a core particle comprising a layered lithium nickel-manganese-based composite oxide,
a first coating layer on a surface of the core particle and comprising aluminium (Al), and
a second coating layer on the first coating layer and comprising nickel (Ni).

2. The positive electrode active material as claimed in claim 1, wherein in the layered lithium nickel-manganese-based composite oxide of the core particle,
nickel is in an amount of 60 mol% to 80 mol% and manganese is in an amount of greater than or equal to 10 mol%, based on 100 mol% of all metals in the layered lithium nickel-manganese-based composite oxide excluding lithium.

3. The positive electrode active material as claimed in claim 1 or claim 2, wherein:
(i) the layered lithium nickel-manganese-based composite oxide of the core particle further comprises aluminium and aluminium is in an amount of 1 mol% to 3 mol%, based on 100 mol% of all metals in the layered lithium nickel-manganese-based composite oxide excluding lithium; and/or
(ii) in the layered lithium nickel-manganese-based composite oxide of the core particle,
cobalt is in an amount of at most 0.01 mol% based on 100 mol% of all metals in the layered lithium nickel-manganese-based composite oxide excluding lithium.

4. The positive electrode active material as claimed in any one of claims 1 to 3, wherein
the layered lithium nickel-manganese-based composite oxide of the core particle is represented by Chemical Formula 1:
Chemical Formula 1 Liₐ₁Niₓ₁Mn_{y1}Al_{z1}M¹_{w1}O_{2-b1}X_{b1},
in Chemical Formula 1, 0.9≤a1≤1.8, 0.6≤x1≤0.8, 0.1≤y1≤0.4, 0≤z1≤0.03, 0≤ w1≤0.3, 0.9≤x1+y1+z1+w1≤1.1, and 0≤b1≤0.1,
M¹ is one or more elements selected from among B, Ba, Ca, Ce, Cr, Fe, Mg, Mo, Nb, Si, Sn, Sr, Ti, V, W, Y and Zr, and
X is one or more elements selected from among F, P, and S.

5. The positive electrode active material as claimed in any one of claims 1 to 4, wherein:
(i) the first coating layer and the second coating layer are each in a form of a continuous film; and/or
(ii) a thickness of the first coating layer is 5 nm to 40 nm, and
a thickness of the second coating layer is less than or equal to 10 nm.

6. The positive electrode active material as claimed in any one of claims 1 to 5, wherein
a ratio of a thickness of the second coating layer to a thickness of the first coating layer is less than 0.5.

7. The positive electrode active material as claimed in any one of claims 1 to 6, wherein:
(i) an Al amount in the first coating layer is 0.1 mol% to 2 mol% based on 100 mol% of all metals excluding lithium in the positive electrode active material, and a Ni amount in the second coating layer is 0.01 mol% to 1 mol% based on 100 mol% of all metals excluding lithium in the positive electrode active material; or
(ii) an Al amount in the first coating layer is 0.5 mol% to 1.5 mol% based on 100 mol% of all metals excluding lithium in the positive electrode active material, and
a Ni amount in the second coating layer is 0.05 mol% to 0.5 mol% based on 100 mol% of all metals excluding lithium in the positive electrode active material.

8. The positive electrode active material as claimed in any one of claims 1 to 7, wherein:
(i) a ratio of a Ni amount in the second coating layer to an Al amount in the first coating layer is less than 0.5; and/or
(ii) the first coating layer comprises aluminium oxide, lithium-aluminium oxide, or a combination thereof, and
the second coating layer comprises nickel oxide, lithium-nickel oxide, aluminium-nickel oxide, lithium-aluminium-nickel oxide, or a combination thereof; and/or
(iii) the first coating layer and the second coating layer have a layered structure.

9. The positive electrode active material as claimed in any one of claims 1 to 8, wherein:
(i) the core particle is in a form of a secondary particle made by agglomerating a plurality of primary particles, and
the positive electrode active material further comprises a grain boundary coating portion comprising Al, the grain boundary coating portion being on surfaces of primary particles inside the of the secondary particle; optionally wherein
an Al amount in the grain boundary coating portion is less than an Al amount in the first coating layer; and/or
(ii) the positive electrode active material is in a form of a secondary particle and the secondary particle has an average particle diameter (D₅₀) of 10 µm to 20 µm.

10. A method for preparing a positive electrode active material, the method comprising:
mixing a layered nickel-manganese composite hydroxide and a lithium raw material and performing a first heat treatment to obtain a lithium nickel-manganese-based composite oxide,
adding an aluminium (Al) raw material to an aqueous solvent, adding the lithium nickel-manganese composite oxide thereto and mixing them, then adding a nickel (Ni) raw material and mixing them, and
drying the mixture and performing a second heat treatment.

11. The method as claimed in claim 10, wherein:
(i) in the layered nickel-manganese-based composite hydroxide,
nickel is in an amount of 60 mol% to 80 mol%,
manganese is in an amount of greater than or equal to 10 mol%,
aluminium is in an amount of at most 3 mol%, and
cobalt is in an amount of at most 0.01 mol%,
each of which based on 100 mol% of all metals in the layered nickel-manganese-based composite hydroxide; and/or
(ii) an Al amount in the Al raw material is 0.1 mol% to 2 mol% based on 100 mol% of all metals excluding lithium in the positive electrode active material, and
a Ni amount in the Ni raw material is 0.01 mol% to 1 mol% based on 100 mol% of all metals excluding lithium in the positive electrode active material.

12. The method as claimed in claim 10 or claim 11, wherein:
(i) the Al raw material comprises aluminium nitrate, aluminium sulfate, aluminium carbonate, aluminium hydroxide, or a combination thereof, and the Ni raw material comprises nickel nitrate, nickel sulfate, nickel carbonate, nickel hydroxide, or a combination thereof; and/or
(ii) a solution in which the Al raw material is added to the aqueous solvent has a pH of 1.5 to 3.5; and/or
(iii) the first heat treatment is performed at 750 °C to 950 °C, and
the second heat treatment is performed at 700 °C to 850 °C.

13. A positive electrode, comprising:
a positive electrode current collector, and
a positive electrode active material layer on the positive electrode current collector,
wherein the positive electrode active material layer comprises the positive electrode active material as claimed in any one of claims 1 to 9.

14. The positive electrode as claimed in claim 13, wherein:
(i) the positive electrode active material layer has a loading level of 10 mg/cm² to 40 mg/cm²; and/or
(ii) the positive electrode active material layer has a density of 3.3 g/cc to 3.7 g/cc.

15. A rechargeable lithium battery, comprising:
the positive electrode as claimed in claim 13 or claim 14,
a negative electrode, and
an electrolyte, optionally wherein
a charging voltage of the rechargeable lithium battery is greater than or equal to 4.45 V.
